# EUROPÄISCHE PATENTANMELDUNG

(11) **EP 3 530 360 A1**
(43) Veröffentlichungstag der Anmeldung: **28.08.2019**
(21) Anmeldenummer: 18157870.9
(22) Anmeldetag: 21.02.2018
(51) Int. Cl.: B07C 5/02, B07C 1/00, B65G 43/00

(54) **ERKENNUNG VON NICHT FÖRDERFÄHIGEN SENDUNGEN**

(71) Anmelder: Siemens Aktiengesellschaft, 80333 München (DE)
(72) Erfinder: ROTTLAND, Jörg, 78315 Radolfzell (DE); RÖHM, Eberhard, 78224 Singen (DE); ZETTLER, Michael, 78476 Allensbach (DE)
(74) Vertreter: Maier, Daniel Oliver

(57) **Zusammenfassung**

Um für ein Fördersystem nicht förderfähige Sendungen kostengünstig zu erkennen sind eine Förderstrecke (3) und ein Lichtgitter oder vergleichbare Messanordnung (4) so ausgestaltet und angeordnet, dass eine Sendung (2) auf der Förderstrecke (3) durch das Lichtgitter (4) hindurch förderbar ist, sodass dabei eine die Sendung (2) charakterisierende Datenstruktur (21) mittels des Lichtgitters (4) erzeugbar und in das Erkennungssystem (5) einspeisbar ist. Das Erkennungssystem (5) ist adaptiert anhand der Datenstruktur (21) zu beurteilen, ob die Sendung (2) förderfähig ist oder nicht.

## Beschreibung

Die Erfindung bezieht sich auf das technische Gebiet der Erkennung von durch ein Fördersystem nicht förderfähigen Sendungen.

Fördersysteme können Sortiersysteme oder sonstige Fördersysteme sein, beispielsweise zum Transport oder zur Sortierung von Reisegepäck innerhalb von Flughäfen. Der Begriff Fördersystem umfasst also reine Fördersysteme von Sendungen, aber auch Sortiersysteme. Sendungen können beispielsweise Reisegepäck von Passagieren, aber auch postalische Sendungen, beispielsweise Briefe, Pakete, Postsäcke oder sonstige Förderobjekte umfassen.

Die Verfügbarkeit eines Fördersystems sinkt, wenn sich nicht förderfähige Sendungen auf den Förderstrecken, beispielsweise auf Förderbändern, befinden. Förderbänder oder Sorter können dadurch Ausfallen oder beschädigt werden.

Die Erkennung von nicht förderfähigen Sendungen geschieht heute mit hochauflösenden Kameras. Diese involvieren in der Regel auch komplexe Time of Flight (ToF-) Messungen. Die Technologie dazu ist aufwändig und daher teuer.

Der vorliegenden Erfindung liegt daher die Aufgabe zugrunde, für ein Fördersystem nicht förderfähige Sendungen kostengünstig zu erkennen.

Diese Aufgabe wird durch die in den unabhängigen Ansprüchen vorgeschlagenen Verfahren und Vorrichtungen gelöst.

Gemäss einem Aspekt wird ein Verfahren zum Erkennen von durch ein Fördersystem nicht förderfähigen Sendungen vorgestellt. Das Verfahren umfasst die folgenden Verfahrensschritte:
Eine Sendung wird auf einer Förderstrecke durch ein Lichtgitter gefördert. Dabei wird eine die Sendung charakterisierenden Datenstruktur mittels des Lichtgitters erzeugt. Die Datenstruktur wird mittels eines Erkennungssystems analysiert. Dabei wird beurteilt, ob die Sendung förderfähig ist oder nicht.

Gemäss einem weiteren Aspekt wird ein System zum Erkennen von durch ein Fördersystem nicht förderfähigen Sendungen vorgestellt. Dieses System umfasst eine Förderstrecke, ein Lichtgitter und ein Erkennungssystem. Die Förderstrecke und das Lichtgitter sind ausgestaltet und angeordnet, dass die Sendung auf der Förderstrecke durch das Lichtgitter hindurch förderbar ist. Dabei ist eine die Sendung charakterisierende Datenstruktur mittels des Lichtgitters erzeugbar und in das Erkennungssystem einspeisbar.
Das Erkennungssystem ist ausgestaltet anhand der Datenstruktur zu beurteilen, ob die Sendung förderfähig ist oder nicht.

Gemäss einem weiteren Aspekt wird ein System zum Erkennen von durch ein Fördersystem nicht förderfähigen Sendungen vorgestellt. Dieses System umfasst eine Förderstrecke, eine Messanordnung und ein Erkennungssystem. Die Messanordnung umfasst eine Senderanordnung und eine Empfängeranordnung, die derart ausgestaltet und angeordnet sind, dass zwischen der Senderanordnung und der Empfängeranordnung ein Messbereich besteht, der so angeordnet ist, das mittels der Förderstrecke die Sendung durch den Messbereich hindurch förderbar ist. Der Messbereich besteht durch von der Senderanordnung aussendbaren und von der Empfängeranordnung empfangbaren Wellensignalen. Die Empfängeranordnung ist ausgestaltet, aufgrund empfangener Wellensignale Empfängersignale zu erzeugen und diese in das Erkennungssystem einzuspeisen. Das Erkennungssystem ist ausgestaltet, anhand von während durch das Hindurchfördern der Sendung durch den Messbereich beeinflussten Empfängersignalen zu beurteilen, ob die Sendung förderfähig ist oder nicht.

Vorteilhafte Ausgestaltungen der Erfindung sind in weiteren Ansprüchen angegeben.

Gemäss einem Ausführungsbeispiel ist das Fördersystem ein Fluggepäckfördersystem, gemäss einem andern Ausführungsbeispiel ein Fördersystem zur Sortierung von Versand-Paketen, gemäss einem andern Ausführungsbeispiel ein Fördersystem zur Sortierung von Briefen.

Die Messanordnung kann beispielsweise ein Lichtgitter sein, wobei der Begriff Lichtgitter so zu verstehen ist, dass dieser nicht auf sichtbares Licht begrenzt ist, sondern alle auf elektromagnetischen Wellen basierenden geeigneten Sender-Empfänger-Anordnungen umfasst, insbesondere auch auf infrarotem Licht, sichtbarem Licht, Mikrowellen, ultraviolettem Licht oder Röntgenstrahlung basierenden Wellen. Mittels eines auf sichtbarem Licht oder auf infrarotem Licht basierenden Lichtgitters sind besonders kostengünstige Lösungen zu erwarten. Gemäss einer Ausführungsform sind die Sender Leuchtdioden. Neben Lichtgittern sind auch auf nicht elektromagnetischen Wellen basierende Messanordnungen denkbar, beispielsweise auf akustischen Wellen basierende Messanordnungen.

Gemäss einem Ausführungsbeispiel umfasst die mittels der Messanordnung, respektive die mittels des Lichtgitters erzeugte Datenstruktur mindestens einen Schattenriss, vorzugsweise mindestens zwei aus unterschiedlichen Richtungen aufgenommene Schattenrisse der Sendung. Schattenrisse haben den Vorteil dass sie mittels eines Lichtgitters besonders einfach erzeugbar sind. Zudem haben Schattenrisse insbesondere gegenüber auf fotografischen Lösungen den Vorteil, dass sie die Sendungen besonders leicht erkennbar und auswertbar sind.

Gemäss einem Ausführungsbeispiel umfasst die mittels der Messanordnung, respektive die mittels des Lichtgitters erzeugte Datenstruktur zwei Schattenrisse, wobei ein erster Schattenriss ein vertikaler Schattenriss und ein zweiter Schattenriss ein horizontaler Schattenriss der Sendung ist. Gemäss einem Ausführungsbeispiel sind die zwei Schattenrisse senkrecht zur Förderrichtung der Förderstrecke. Der vertikale Schattenriss lässt sich durch ein Lichtgitter erzeugen, das eine Senderanordnung oder eine Empfängeranordnung in einer die Förderstrecke unterbrechenden Spalte angeordnet hat.

Gemäss einem Ausführungsbeispiel ist der Schattenriss als Binärbild ausgeführt, respektive sind die Schattenrisse als Binärbilder ausgeführt.

Gemäss einem Ausführungsbeispiel erlernt das Erkennungssystem die Beurteilung, ob die Sendung förderfähig ist oder nicht, maschinell, vorzugsweise mittels eines neuronalen Netzes, vorzugsweise mittels eines computerimplementierten neuronalen Netzes.

Gemäss einem Ausführungsbeispiel wird eine geeignete Massnahme vorgenommen, falls die Beurteilung ergibt, dass die Sendung nicht förderfähig ist. Eine geeignete Massnahme kann beispielsweise das Ausschleusen der Sendung aus dem Fördersystem sein, aber auch das Umlagern oder versetzen der Sendung in einen förderfähigen Zustand, beispielsweise indem eine für eine Fluggepäckförderanlage ein ausgezogener Griff eines Rollkoffers in den Rollkoffer einfahren wird. Um eine geeignete Massnahme vorzunehmen, kann das System zum Erkennen von durch ein Fördersystem nicht förderfähigen Sendungen ein durch das Erkennungssystem ansteuerbares Korrektursystem umfassen. Das Korrektursystem kann beispielsweise eine Weiche sein, um eine nicht förderfähige Sendung aus dem Fördersystem auszuschleusen. Andere Korrektursysteme können beispielsweise ausgestaltet sein, die nicht förderfähige Sendung umzulagern oder in einen förderfähigen Zustand zu versetzen.

Gemäss einem Ausführungsbeispiel ist der Messbereich flächig und quer zur Förderrichtung der Förderstrecke angeordnet, vorzugsweise senkrecht. Dies ist mit einem Lichtgitter auf besonders einfache Weise erreichbar und ergibt den Vorteil, dass die Sendung während des Förderns durch den flächigen Messbereich abgescannt werden kann. Mit andern Worten, der Messbereich kann dadurch in Förderrichtung kleiner sein, als die Sendung.

Gemäss einem Ausführungsbeispiel umfasst die Senderanordnung einen oder mehrere Sender und/oder die Empfängeranordnung einen oder mehrere Empfänger.

Gemäss einem Ausführungsbeispiel sind die Senderanordnung und die Empfängeranordnung sich gegenüber liegend angeordnet, wie dies beispielsweise bei kommerziell erhältlichen Lichtgittern in der Regel der Fall ist. Dies ermöglicht besonders einfache Konstruktionen. Andere Lösungen bei denen Sender und Empfänger eines Lichtgitters auf einer Reihe ineinander verschachtelt angeordnet sind, sind jedoch ebenfalls denkbar.

Gemäss einem Ausführungsbeispiel umfasst die Senderanordnung eine Richtcharakteristik, wobei vorzugsweise die Richtcharakteristik eines Senders, also eine starke Intensität, jeweils auf einen Empfänger gerichtet ist. In alternativen Ausführungsbeispielen müssen die Richtcharakteristiken nicht auf die Empfänger gerichtet sein, und es ist auch nicht nötig, dass jedem Sender genau ein Empfänger zugeordnet ist. Ebenso sind Lösungen denkbar, bei denen komplexere Messanordnungen mittels neuronale Netze trainiert werden, zu beurteilen, ob eine Sendung förderfähig ist oder nicht.

Die Erfindung wird nachfolgend anhand der Figuren beispielsweise näher erläutert. Dabei zeigen:
Figur 1 eine schematische Darstellung von oben auf ein System zum Erkennen von durch ein Fördersystem nicht förderfähigen Sendungen gemäss einem Ausführungsbeispiel der Erfindung;
Figur 2 eine schematische Darstellung von der Seite auf das in Figur 1 dargestellte System;
Figur 3 eine schematische Darstellung von einer anderen Seite auf das in Figur 1 und 2 dargestellte System;
Figur 4 mehrere Schattenrisse von Gepäckstücken eines Fluggepäckfördersystems zusammen mit einer Beurteilung, ob diese auf dem Fluggepäckfördersystem förderfähig sind oder nicht;

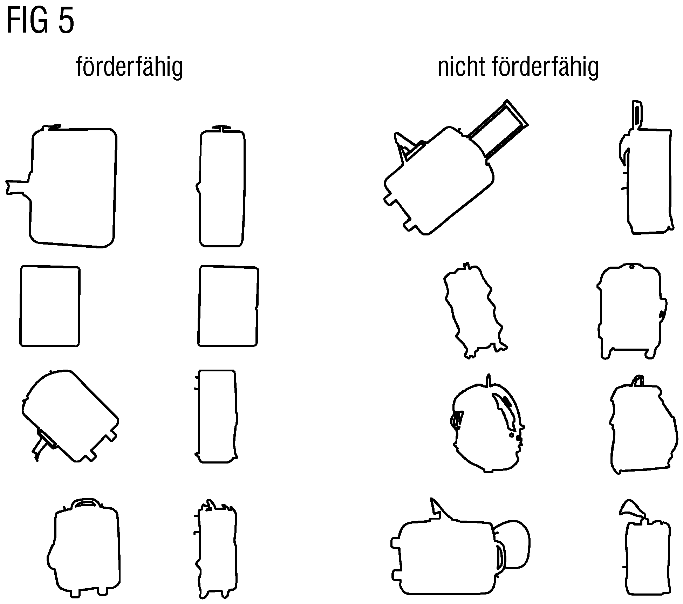

Figur 5 weitere Schattenrisspaare eingeteilt in förderfähige und nicht förderfähige Sendungen.

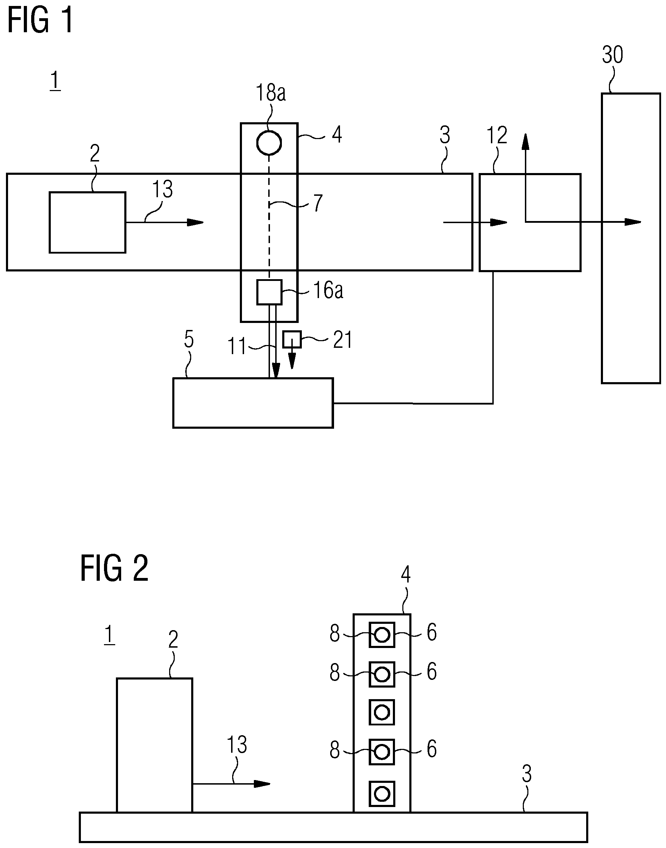

Figur 1 zeigt eine schematische Darstellung von oben auf ein System 1 zum Erkennen von durch ein Fluggepäckfördersystem 30 nicht förderfähigen Sendungen 2 gemäss einem Ausführungsbeispiel der Erfindung. Das System 1 wird im Folgenden auch Klassifikationssystem 1 genannt.

Das Klassifikationssystem 1 umfasst eine Förderstrecke 3, eine ein Lichtgitter umfassende Messanordnung 4 und ein Erkennungssystem 5.

Die Förderstrecke 3 ist ausgestaltet, die Sendung 2 entlang einer Förderrichtung 13 zu fördern. Die Förderstrecke 3 und die Messanordnung 4 sind ausgestaltet und angeordnet, dass die Sendung 2 auf der Förderstrecke 3 durch einen Messbereich 7 der Messanordnung 4 hindurch förderbar ist, derart dass dabei eine die Sendung charakterisierende digitale Datenstruktur 21 mittels der Messanordnung 4 erzeugbar und in das Erkennungssystem 5 einspeisbar ist. Dazu ist das Lichtgitter quer, vorzugsweise orthogonal zur Förderrichtung 13 angeordnet. Die Datenstruktur 21 lässt sich so während des Durchförderns der Sendung 2 durch das Lichtgitter mittels eines Scanvorgangs erzeugten. Das Erkennungssystem 5 ist adaptiert, anhand der Datenstruktur 21 zu beurteilen, ob die Sendung 2 förderfähig ist oder nicht. Ebenfalls ersichtlich ist in Figur 1 eine Senderanordnung 18a mit vertikal in einer Linie angeordneten Leuchtdioden 8 und einer Empfängeranordnung 16a mit vertikal in einer Linie angeordneten Photodioden 6.

Figur 2 zeigt das Klassifikationssystem 1 von Figur von der Seite her, mit einer Blickrichtung senkrecht zur Förderrichtung 13, mit den vertikal in einer Linie angeordneten Leuchtdioden 8 der Senderanordnung 18a und den vertikal in einer Linie angeordneten Photodioden 6 der Empfängeranordnung 16a.

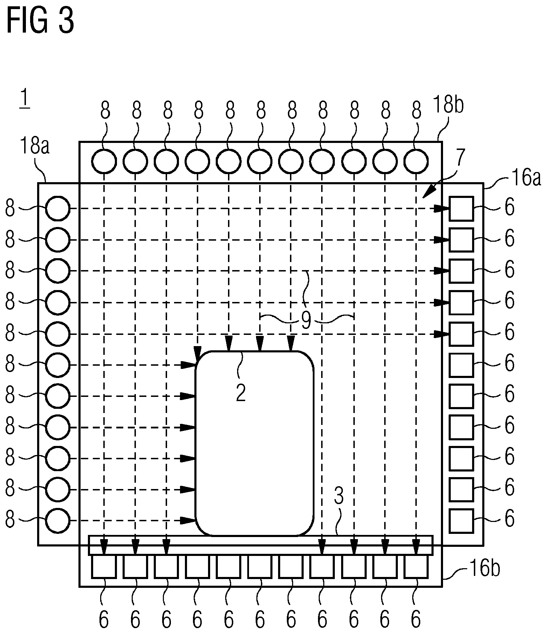

Figur 3 zeigt eine schematische seitliche Darstellung des Klassifikationssystems 1 von Figur 1 entlang der Förderrichtung 13. In dieser Ansicht ist die Messanordnung 4 besonders gut zu erkennen. Die Messanordnung 4 umfasst zwei Lichtgitter, wobei eines der Lichtgitter horizontal und das andere Lichtgitter vertikal angeordnet sind. Jedes der Lichtgitter umfasst eine Senderanordnung 18a und eine Empfängeranordnung 16a, repektive 18b und 16b. Jede der Senderanordnungen 18a, 18b umfasst linear angeordnete Leuchtdioden 8 und jede der Empfängeranordnungen 16a, 16b umfasst linear angeordnete Photodioden 6.

In dem vertikal angeordneten Lichtgitter (vertikal hinsichtlich der Richtung des Strahlengangs) sind die Leuchtdioden 8 der Senderanordnung 18b über den Photodioden 6 der Empfängeranordnung 16b angeordnet. Jede der Leuchtdioden besitzt eine Richtcharakteristik, also eine Richtung in welcher die Leuchtdiode 8 eine maximale Intensität abstrahlt, und die auf eine darunter liegende Photodiode 6 der Empfängeranordnung 16b gerichtet ist. So wird ein vertikales Gitter definiert, welches durch vertikal verlaufenden Wellensignale 9, ähnlich vertikal verlaufenden Gitterstäben, charakterisiert ist. Um die stabförmig ausgestaltete Empfängeranordnung 16b möglichst einfach anzubringen, umfasst die Förderstrecke 3 eine Unterbrechung, respektive eine vorzugsweise senkrecht zur Förderrichtung 13 verlaufende Spalte, in welche die Empfängeranordnung 16b eingelassen ist.

Auf diese Weise wird zwischen Senderanordnung 18b und der Empfängeranordnung 16b durch von der Senderanordnung 18a aussendbaren und von der Empfängeranordnung 16a empfangbaren Wellensignalen 9 ein Messbereich 7 definiert, der so angeordnet ist, dass mittels der Förderstrecke 3 die Sendung durch den Messbereich 7, respektive durch das Lichtgitter 4 hindurch förderbar ist.

Auf analoge Weise umfasst die Messanordnung 4 wie in Figur 3 dargestellt ein horizontales Lichtgitter, welches die Senderanordnung 18a und die Empfängeranordnung 16a umfasst, mittels welchen horizontale Wellensignale 9 den Messbereich 7 definieren. In dem in Figuren 1-3 dargestellten Ausführungsbeispiel hat das horizontale Lichtgitter 16a, 18a denselben Messbereich 7 wie das vertikale Lichtgitter 16b, 18b. In andern Ausführungsbeispielen sind die Messbereiche der beiden Lichtgitter unterschiedlich, beispielsweise indem die Lichtgitter nicht derselben Ebene angeordnet sind, oder in derselben Ebene, aber versetzt zueinander angeordnet sind. Ebenso sind Ausführungen denkbar, bei denen nur ein Lichtgitter verwendet wird. Beispielsweise sollte bei horizontal liegenden Koffern bereits mittels eines vertikalen Lichtgitters erzeugten Schattenrisses erkennbar sein, ob ein Handgriff des Koffers sich in einem ausgefahrenen Zustand befindet.

An dieser Stelle sei auch erwähnt, dass der Begriff "Lichtgitter" sowohl ein horizontales Lichtgitter, ein vertikales Lichtgitter, ein sonstwie geeignet angeordnetes, z.B. schief angeordnetes Lichtgitter, umfasst. Auch umfasst der Begriff "Lichtgitter" Anordnungen aus zwei oder mehr Lichtgittern, beispielsweise wie das in Figur 3 dargestellte doppelte Lichtgitter mit dem horizontalen und dem vertikalen Lichtgitter.

Als Lichtgitter 4 kann beispielsweise eine MLG2 light array der Firma Sick verwendet werden.

Die Empfängeranordnungen 16a, 16b, respektive die Photodioden 6 sind ausgestaltet, aufgrund empfangener Wellensignale 9 elektronische Empfängersignale 11 zu erzeugen und diese in das Erkennungssystem 5 einzuspeisen. Das Erkennungssystem 5 ist ausgestaltet, anhand von während durch das Hindurchfördern der Sendung 2 durch den Messbereich 7 beeinflussten Empfängersignalen 11 zu beurteilen, ob die Sendung 2 förderfähig ist oder nicht.

Dazu kann das Erkennungssystem beispielsweise von dem in Figur 3 dargestellten horizontalen 16a, 18a sowie von dem vertikalen 16b, 18b Lichtgitter elektronische Empfängersignale 11, respektive in den Empfängersignalen 11 enthaltene Datenstrukturen 21, empfangen, welche jeweils einen Schattenriss repräsentieren, respektive umfassen, also einen Schattenriss projiziert auf die Grundebene von dem vertikalen Lichtgitter, sowie einen Schattenriss projiziert auf eine vertikale parallel zur Förderrichtung 13 verlaufende Seitenebene von dem horizontalen Lichtgitter. Diese Schattenrisse können durch das Erkennungssystem 5 als Binärbilder dargestellt, und weiter verarbeitet werden, indem deren Konturen oder äusseren Begrenzungen, oder sonstige Charakteristika ermittelt werden, die geeignet sind zu beurteilen, ob die Sendung durch das Fördersystem förderfähig ist oder nicht.

Die Leuchtdioden 8 sowie die Photodioden 6 arbeiten vorzugsweise im Infrarotbereich oder mit sichtbarem Licht. In alternativen Ausführungsformen können auch andere geeignete Bereiche des elektromagnetischen Spektrums verwendet werden. Ebenso sind Lösungen denkbar, in welchen akkustische Sender und Empfänger verwendet werden, anstelle von Photodioden und Photodetektoren.

In varianten Ausführungsbeispielen brauchen die Leuchtdioden oder sonstigen Sender der Senderanordnung nicht gitterähnlich, also in parallel verlaufenden Wellensignalen, auf Photodioden oder sonstige Empfänger gerichtet sein. Die Signale können beispielsweise auch in gekreuzten oder windschiefen Bahnen verlaufen. Es ist zu erwarten, dass mittels neuronalen Netzen sogar solche Messanordnungen trainiert werden können, um Aussagen über die Förderfähigkeit einer Sendung machen zu können. Auch sind Lösungen denkbar, bei denen die Richtungscharakteristiken, respektive deren Maxima nicht auf die Empfänger gerichtet sein müssen, aber auch Lösungen mit Senderanordnungen die gar keine Richtungscharakteristiken aufweisen, beispielsweise indem neuronale Netzen mit den Ausgangssignalen der Empfängeranordnung, also den Empfängersignalen, trainiert werden, zu beurteilen, ob die Sendung förderfähig ist oder nicht.

Verweisend auf Figur 1 umfasst das Klassifikationssystem 1 zudem eine durch das Erkennungssystem 5 ansteuerbare Weiche 12, welche die Sendung 2 ausschleust, falls die Beurteilung ergibt, dass die Sendung 2 nicht förderfähig ist. Alternativ oder zusätzlich kann auch ein Warnmittel ein menschlich wahrnehmbares Signal erzeugen, welche das Bedienpersonal darauf hinweist, dass eine Massnahme ergriffen werden muss. Falls die Beurteilung ergibt, dass die Sendung 2 förderfähig ist, wird die Sendung auf das Fördersystem 30 gefördert.

Mit dem in den Figuren beschriebenen Ausführungsbeispiel und deren Varianten lassen sich Verfahren zum Erkennen von durch ein Fördersystem nicht förderfähigen Sendungen durchführen. Dabei wird die Sendung 2 auf der Förderstrecke 3 durch das Lichtgitter 4 gefördert und dabei eine die Sendung 2 charakterisierende digitale Datenstruktur 21 mittels des Lichtgitters 4 generiert. Die Datenstruktur 21 wird mittels des Erkennungssystems 5 analysiert. Das Analysieren umfasst eine Beurteilung, ob die Sendung 2 förderfähig ist oder nicht.

Die mittels des Lichtgitters 4 erzeugte Datenstruktur 21 umfasst mindestens einen Schattenriss, vorzugsweise mindestens zwei aus unterschiedlichen Richtungen aufgenommene Schattenrisse der Sendung. Die Schattenrisse sind Binärbilder und können senkrecht zur Förderrichtung 13 der Förderstrecke 3 sowie senkrecht zueinander in einer horizontalen und einer vertikalen Projektionsrichtung aufgenommen werden.

Das Erkennungssystem 5 erlernt die Beurteilung, ob die Sendung förderfähig ist oder nicht maschinell, vorzugsweise mittels eines neuronalen Netzes, vorzugsweise mittels eines computerimplementierten neuronalen Netzes. In einer alternativen ausführungsform wird beurteilt das Erkennungssystem 5 anhand von Algorithmen, ob die Sendung 2 förderfähig ist oder nicht.

Förderfähige Sendungen werden auf dem Fördersystem weiter gefördert. Für nicht förderfähige Sendungen wird eine geeignete Massnahme ergriffen, beispielsweise das Ausschleusen des Gepäcksstücks aus, respektive nicht Einschleusens des Gepäckstücks in das Fördersystem 30 und/oder das generieren eines Warnsignals zur händischen Bearbeitung und/oder das Versetzen der Sendung in einen förderfähigen Zustand.

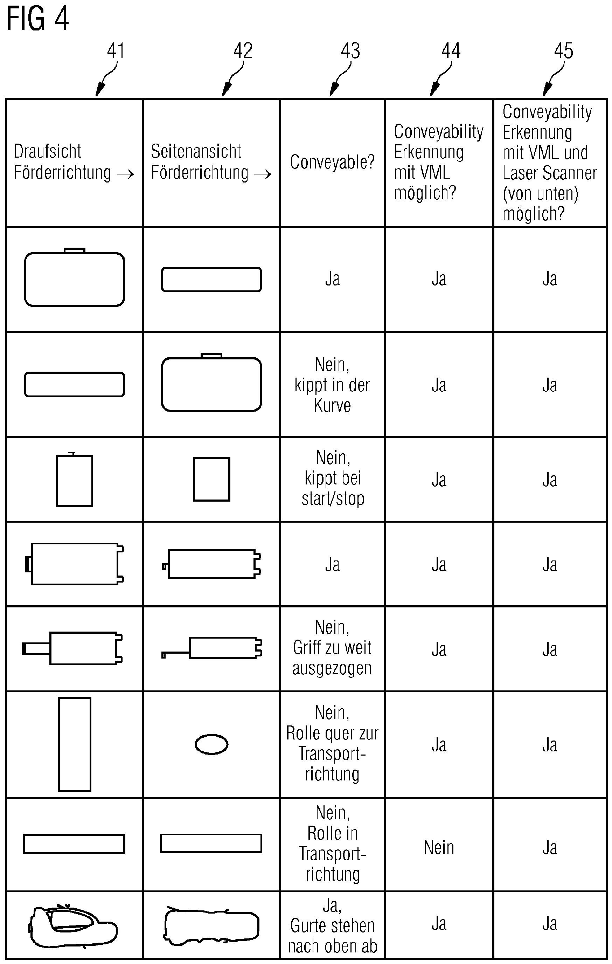

Figur 4 zeigt beispielhaft in tabellarischer Form in den ersten beiden Spalten Schattenrisse von Gepäckstücken in einer Draufsicht 41 und in einer Seitenansicht 52. In der dritten Spalte 43 ist eine Beurteilung (Ja/nein), ob das Gepäckstück förderbar ist oder nicht. In der vierten Spalte 44 ist festgehalten, ob es mittels eines Lichtgitters möglich ist, zu beurteilen, ob das Gepäckstück förderfähig ist oder nicht. In der fünften Spalte 45 ist zudem festgehalten, ob mittels eines Lichtgitters und eines Laser Scanners, der von unten wirkt, beurteilt werden kann, ob das Gepäckstück förderfähig ist oder nicht.

Ein weiteres Ausführungsbeispiel umfasst Folgendes:
1. Integration eines 2D Lichtgitters in die Fördertechnik und Erzeugung eines Paars von Binärbildern.
2. Binärbilder werden an ein Erkennungssystem transferiert. Dort befindet sich z.B. ein Deep Learning basiertes Erkennungssystem, welches vorab auf Testmaterial trainiert wurde. Es klassifiziert die Bilddaten in "Conveyables" bzw,"Non Conveyables" Objekte.
3. Bei "Non Conveyable" wird eine Aktion ausgelöst. Entweder das Band gestoppt oder das Gepäckstück wird aus der Anlage gefahren.
4. Optional: Sofern kein vorab trainiertes Netz verfügbar ist, werden die Bilddaten an ein Videokodiersystem (VCS) übertragen. Ein Operator bekommt die Darstellung des Objekts auf dem Bildschirm präsentiert und er klassifiziert das Objekt online in Förderfähig oder Nicht-Förderfähig.
   Zyklisch wird basierend auf den Bildern und den dazugehörigen Ergebnissen des Operators ein Netz trainiert.
   Dies wird solange wiederholt bis ein gewisser Erkennungslevel erreicht wird.
5. Optional: die Bilddaten und die Ergebnisse des VCS werden an eine Cloud gesendet. Dort wird das Netz mit GPU Einsatz gerechnet und an die Station übertragen.

Ausführungsbeispiele der Erfindung ermöglichen eine Erkennung von nicht förderfähigen Sendungen basierend auf Bildern von kostengünstigen Sensoren wie Lichtgitter und tiefen neuronalen Netzwerken zur Objekt Klassifikation.

Gemäss weiteren Ausführungsbeispielen wird ein Bildverarbeitungs-Computer ohne GPU-Beschleunigung verwendet. Hier besteht das Risiko einer zu hohen Anzahl von Falsch-Positiven oder nicht erkannten nicht förderfähigen Sendungen. Als Massnahme kann zudem ein zustäzlicher Laserscanner als zweite Datenquelle verwendet werden.

Ausführungsbeispiele der Erfindung können zudem folgende Vorteile haben:
1. Ein Lichtgitter ist sehr kostengünstig.
2. Ein pseudo Binärbild kann erzeugt und basierend auf einer Testmenge ein Deep Learning Netz trainiert werden.
3. Ein Videocodiersystem kann verwendet werden, um die Objekte zu klassifizieren und das Deep Learing Netz wird auf dieser Basis gerechnet oder trainiert.
5. Das Netz wird zur Klassifikation in förderfähige und nicht förderfähige Sendungen verwendet.
6. Eine zusätzliche Bildkamera kann auch eingesetzt werden um Bilder von der Sendung aufzunehmen, um ein besseres Verständnis anderer Daten zu gewinnen.

Auch kann kostengünstig auch für dunkle und glänzende Sendungen beurteilt werden, ob die Sendung förderfähig ist oder nicht.

## Patentansprüche

1. Verfahren zum Erkennen von durch ein Fördersystem nicht förderfähigen Sendungen, wie beispielsweise Fluggepäck, Pakete oder Briefe, umfassend die Verfahrensschritte:
- Fördern einer Sendung (2) auf einer Förderstrecke (3) durch ein Lichtgitter (4) und dabei Erzeugen einer die Sendung (2) charakterisierenden Datenstruktur (21) mittels des Lichtgitters (4);
- Analysieren der Datenstruktur (21) mittels eines Erkennungssystems (5), wobei das Analysieren eine Beurteilung umfasst, ob die Sendung (2) förderfähig ist oder nicht.

2. Verfahren nach Anspruch 1, wobei die mittels des Lichtgitters (4) erzeugte Datenstruktur (21) mindestens einen Schattenriss, vorzugsweise mindestens zwei aus unterschiedlichen Richtungen aufgenommene Schattenrisse der Sendung umfasst.

3. Verfahren nach einem der vorhergehenden Ansprüche, wobei das Lichtgitter mit infrarotem Licht und/oder mit sichtbarem Licht arbeitet.

4. Verfahren nach einem der vorhergehenden Ansprüche, wobei das Erkennungssystem (5) die Beurteilung, ob die Sendung förderfähig ist oder nicht, maschinell erlernt, vorzugsweise mittels eines neuronalen Netzes, vorzugsweise mittels eines computerimplementierten neuronalen Netzes.

5. Verfahren nach einem der vorhergehenden Ansprüche, wobei eine geeignete Massnahme, wie beispielsweise das Ausschleusen, Umlagern oder versetzen der Sendung (2) in einen förderfähigen Zustand, vorgenommen wird, falls die Beurteilung ergibt, dass die Sendung (2) nicht förderfähig ist.

6. System (1) zum Erkennen von durch ein Fördersystem nicht förderfähigen Sendungen (2), umfassend eine Förderstrecke (3), ein Lichtgitter (4) und ein Erkennungssystem (5), wobei:
- die Förderstrecke (3) und das Lichtgitter so ausgestaltet und angeordnet sind, dass die Sendung (2) auf der Förderstrecke (3) durch das Lichtgitter (4) hindurch förderbar ist, sodass dabei eine die Sendung (2) charakterisierende Datenstruktur (21) mittels des Lichtgitters (4) erzeugbar und in das Erkennungssystem (5) einspeisbar ist;
- das Erkennungssystem (5) adaptiert ist anhand der Datenstruktur (21) zu beurteilen, ob die Sendung (2) förderfähig ist oder nicht.

7. System (1) nach Anspruch 6, wobei die Datenstruktur (21) mindestens einen Schattenriss, vorzugsweise mindestens zwei aus unterschiedlichen Richtungen aufgenommene Schattenrisse der Sendung umfasst.

8. System (1) nach einem der Ansprüche 6 oder 7, wobei das Lichtgitter ein Infrarot-Lichtgitter oder ein im sichtbaren Bereich arbeitendes Lichtgitter ist.

9. System (1) zum Erkennen von durch ein Fördersystem nicht förderfähigen Sendungen (2), umfassend eine Förderstrecke (3), eine Messanordnung (4) und ein Erkennungssystem (5);
- Wobei die Messanordnung (4) eine Senderanordnung (18a, 18b) und eine Empfängeranordnung (16a, 16b) umfasst, die derart ausgestaltet und angeordnet sind, dass zwischen der Senderanordnung (18a, 18b) und der Empfängeranordnung (16a, 16b) durch von der Senderanordnung (18a, 18b) aussendbaren und von der Empfängeranordnung (16a, 16b) empfangbaren Wellensignalen (9) ein Messbereich (7) besteht, der so angeordnet ist, dass mittels der Förderstrecke (3) die Sendung durch den Messbereich (7) hindurch förderbar ist;
- Wobei die Empfängeranordnung (16a, 16b) ausgestaltet ist, aufgrund empfangener Wellensignale (9) Empfängersignale (11) zu erzeugen und diese in das Erkennungssystem (5) einzuspeisen;
- Wobei das Erkennungssystem (5) ausgestaltet ist, anhand von während durch das Hindurchfördern der Sendung (2) durch den Messbereich (7) beeinflussten Empfängersignalen (11) zu beurteilen, ob die Sendung (2) förderfähig ist oder nicht.

10. System (1) nach Anspruch 9, wobei der Messbereich (7) flächig und quer zu einer Förderrichtung (13) der Förderstrecke (3) angeordnet ist.

11. System (1) nach einem der Ansprüche 9 oder 10, wobei die Senderanordnung (18a, 18b) und die Empfängeranordnung (16a, 16b) sich gegenüber liegend angeordnet sind.

12. System (1) nach einem der Ansprüche 9 bis 11, wobei die Senderanordnung (18a, 18b) einen oder mehrere Sender umfasst und/oder die Empfängeranordnung einen oder mehrere Empfänger umfasst.

13. System (1) nach einem der Ansprüche 9 bis 12, wobei die Senderanordnung eine Richtcharakteristik umfasst, wobei vorzugsweise die Richtcharakteristik eines Senders jeweils auf einen Empfänger gerichtet ist.

14. System (1) nach einem der Ansprüche 9 bis 13, wobei die Senderanordnung (18a, 18b) Lichtquellen umfasst, die vorzugsweise Leuchtdioden sind, die die Wellensignale (9) erzeugen, wobei die Wellensignale vorzugsweise Infrarotsignale und/oder Lichtsignale sind.

15. System (1) nach einem der Ansprüche 6 bis 14, wobei das Erkennungssystem (5) ausgestaltet ist, die Beurteilung, ob die Sendung förderfähig ist oder nicht, maschinell zu erlernen, vorzugsweise mittels eines neuronalen Netzes, vorzugsweise mittels eines computerimplementierten neuronalen Netzes.

16. System (1) nach einem der Ansprüche 6 bis 15, umfassend ein durch das Erkennungssystem (5) ansteuerbares Korrektursystem (12), beispielsweise eine Weiche, welches ausgestaltet ist, eine geeignete Massnahme, wie beispielsweise das Ausschleusen, Umlagern oder versetzen der Sendung (2) in einen förderfähigen Zustand, vorzunehmen, falls die Beurteilung ergibt, dass die Sendung (2) nicht förderfähig ist.

17. System (1) nach einem der Ansprüche 6 bis 16, wobei das Fördersystem ein Fluggepäckfördersystem oder ein Fördersystem zur Sortierung von Paketen oder ein Fördersystem zur Sortierung von Briefen ist.
